# EUROPEAN PATENT SPECIFICATION

(11) **EP 3 312 066 B1**
(45) Date of publication and mention of the grant of the patent: **12.06.2019**
(21) Application number: 17197846.3
(22) Date of filing: 23.10.2017
(51) Int. Cl.: B60T 15/04, B60T 15/20

(54) **DEVICE FOR CONTROLLING THE BRAKING OF A TRAILER**
GERÄT FÜR DIE REGELUNG DER BREMSUNG EINES ANHÄNGERS
DISPOSITIF DER REGLAGE DU FREINAGE D'UN REMORQUE

(30) Priority: 24.10.2016 IT 201600107031
(43) Date of publication of application: 25.04.2018
(73) Proprietor: SAFIM S.p.A., 41123 Modena (IT)
(72) Inventor: Mamei, Eronne, 41123 Modena (IT); Mamei, Enrico, 41123 Modena (IT); Mamei, Andrea, 41123 Modena (IT)
(74) Representative: Zoli, Filippo

(56) References cited:
- BE-A- 428 784
- BE-A- 494 766
- FR-A- 1 107 239
- FR-A1- 2 238 617
- US-A- 3 085 836

## Description

The present invention relates to a device for controlling the braking of a trailer, particularly for trailers equipped with suspensions.

As known, towing vehicles are currently connected to their trailer by means of a connecting device which allows placing the respective braking systems in communication with each other, so that the braking of the towing vehicle actuated by the operator also causes the braking of the towed trailer.

The braking system of the trailer is therefore driven by the braking system of the tractor in order to synchronize the braking forces acting on these.

The recently introduced standards have set more severe braking performance than in the past both for trailers and for towing vehicles, so braking rates, i.e. the ratio between the braking pressure of the towing vehicle and that of the trailer, should be optimized.

To achieve this target, it is essential to bear in mind that the braking action of the trailer varies depending on its load, that is, the weight that the trailer itself has to carry.

For this reason, some trailers are provided with a braking regulator, which is adapted to "cut" the braking pressure of the trailer depending on its load. In more detail, these braking regulators are of a fixed type, that is, they provide for a set of predefined work positions, selectable by an operator depending on the load of the trailer, each of which corresponds to a maximum limit of the braking pressure of the trailer. These braking regulators of known type, currently applied only to trailers without suspension, do not, however, allow controlling the ratio between the inlet pressure (i.e. the braking pressure of the towing vehicle) and the outlet pressure (i.e. the braking pressure of the trailer) in a variable manner depending on the load of the trailer.

A device for controlling the braking of known type is described in US 3085836. The main aim of the present invention is to provide a device for controlling the braking of a trailer, in particular for trailers without suspensions, which allows for varying in an almost continuous manner the ratio between the braking pressure of the towing vehicle and the braking pressure of the trailer depending on the load of the trailer itself.

Within this aim, one object of the present invention is to provide a braking control device which is capable of operating both on trailers equipped with mechanical suspensions and on those equipped with hydraulic or pneumatic suspensions.

A further object of the present invention is to provide a device for controlling the braking of a trailer which allows overcoming the aforementioned drawbacks of the prior art within the scope of a simple, rational, easy, efficient to use and cost-effective solution.

The aforementioned objects are achieved by the present device for controlling the braking of a trailer, according to claim 1.

Other characteristics and advantages of the present invention will become more evident from the description of a preferred, but not exclusive, embodiment of a device for controlling the braking of a trailer, illustrated by way of an indicative, but non-limiting example, in the attached drawings in which:
Figure 1 is a schematic representation of a device according to the invention;
Figure 2 is a sectional view of a device according to the invention, in a first embodiment;
Figure 3 is a sectional view of a device according to the invention, in a second embodiment;
Figure 4 is a sectional view of a device according to the invention, in a third embodiment;
Figure 5 is a graph showing the ratio between the braking pressure of the towing vehicle and the braking pressure of the trailer when varying the position of the adjustment means.

With particular reference to these illustrations, reference numeral 1 globally indicates a device for controlling the braking of a trailer, particularly for trailers provided with suspensions.

The device comprises at least one body 2, 3, associable with a trailer, inside which is formed at least one seat 4 having at least one braking port 5, communicating with a control line 6 connectable to the braking system of a towing vehicle to receive a work fluid at a first pressure, and at least one delivery port 7, communicating with a delivery line 8 connectable to the braking system of the trailer.

Inside the seat 4 is housed sliding at least one distributor 9, which is moveable between at least one braking position, in which the braking port 5 is in communication with the delivery port 7, and at least one balance position, in which the braking port 5 is isolated from the delivery port 7. More particularly, the distributor 9 is moveable between a position of maximum braking, in which the work fluid passage section which crosses the seat 4 is maximum (and the pressure at the delivery port 7 substantially corresponds to that present at the braking port 5), and the balance position, in which the work fluid passage section which crosses the seat 4 is virtually zero, passing through a plurality of intermediate braking positions, in which the work fluid passage section which crosses the seat 4 is reduced (by changing the pressure at the delivery port 7 accordingly).

Preferably, the seat 4 also has an additional port 10 communicating with an additional line 11 connectable to the automatic and/or parking brake of the trailer and adapted to receive a work fluid from the towing vehicle at a second pressure. The distributor 9 also has at least one discharge position, in which the delivery port 7 is placed in communication with the additional port 10 and is isolated from the braking port 5, so as to allow, during the braking phase, the drain of the work fluid in the braking system of the trailer if its pressure exceeds a predefined value.

Conveniently, along the additional line 11 are arranged first one-way valve means 12 which are adapted to prevent the work fluid from flowing towards the delivery port 7. The first valve means 12 are adapted to allow only the return flow of the work fluid from the delivery port 7 towards the additional line 11. The device 1 comprises at least a driving channel 13 communicating with the delivery port 7 and acting on the distributor 9 to push it away from a braking position towards the balance position. The device 1 then comprises command means 14, acting on the distributor 9, on the opposite side of the driving channel 13, where said command means 14 are adapted to exert on the distributor itself a force of variable intensity depending on the load of the trailer.

Suitably, the delivery line 8 is communicating with the control line 6 and between them are interposed second one-way valve means 15, adapted to prevent the work fluid from flowing from the control line 6 towards the delivery line 8 but not vice versa. More particularly, in the embodiments shown in the illustrations, the second valve means 15 are interposed between the driving channel 13 and the control line 6 and are therefore adapted to allow only the flow of the work fluid from the driving channel 13, i.e. from the delivery line 8, towards the control line 6 in order to allow the drain of the work fluid itself, if required, also in the balance position.

According to the invention, the command means 14 comprise at least a first command element 16, connected in a fluid-operated manner to the control line 6 and adapted to displace between a rest position and a thrust position by effect of the pressure increase of the work fluid along the control line itself, and at least one connecting element 18 adapted to transfer the force from the first command element 16 to the distributor 9 interposed between them.

The position of maximum thrust of the first command element 16 corresponds to the end-of-stroke position of the same away from the rest position and thus corresponds to the position in which it exerts the maximum force on the connecting element 18.

The device 1 then comprises adjustment means 19 of the force transmitted by the connecting element 18 to the distributor 9, which are operatively connectable to the trailer and are likely to displace between a position of maximum load and a position of minimum load depending on the weight supported by the trailer itself.

Therefore, in the position of maximum load, the force transmitted to the distributor 9 is maximum, so that the work fluid pressure that reaches the delivery port 7 is also maximum. In the position of minimum load, on the other hand, the force transmitted to the distributor, and hence the force the latter exerts onto the distributor 9 is minimum, so as to reduce the work fluid pressure that reaches the delivery port 7.

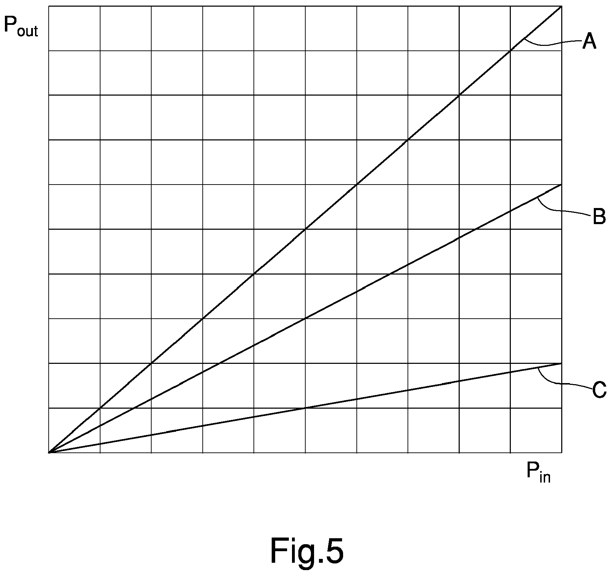

The diagram of Figure 5 shows the pattern of the ratio between the pressure present in the delivery line 8, shown in the abscissas, and the pressure present in the control line 6, shown in the ordinates, depending on the position of the adjustment means 19. In particular, the lines identified by the letters A, B and C identify three different positions of the adjustment means 19 in their displacement from the position of maximum load to the position of minimum load. As visible, the ratio between pressures progressively decreases by displacing from line A to line C, so that line A corresponds to a position of the adjustment means 19 next to that of maximum load, line B to an intermediate position, and line C to a position close to that of minimum load.

More in detail, the connecting element 18 cooperates on one side with the first command element 16 and on the opposite side with the distributor 9, and is movable in rotation around a fulcrum 20. The adjustment means 19 are adapted to vary the position of the fulcrum 20 with respect to the connecting element 18 depending on the load of the trailer.

In the embodiments shown in the figures, in the position of maximum load the distance between the fulcrum 20 and the first command element 16 (more precisely, the contact area between the first command element 16 and the connecting element 18) is maximum, so as to maximize the moment of the force exerted by the first command element itself, while in the position of minimum load, the distance between the fulcrum 20 and the first command element 16 is minimum, so as to minimize the moment of the force transferred by the first command element itself.

As the distance between the fulcrum 20 and the first command element 16 increases, the stroke available for the latter also increases. The first command element 16 thus reaches the position of maximum thrust when the adjustment means 19 are in the position of maximum load.

Alternative embodiments (not shown in the figures) cannot be ruled out, in which the distance between the fulcrum 20 and the first command element 16 is maximum in the position of minimum load and vice versa.

The connecting element 18 can act directly on the distributor 9 or alternatively by means of a second command element 17, as shown in the figures.

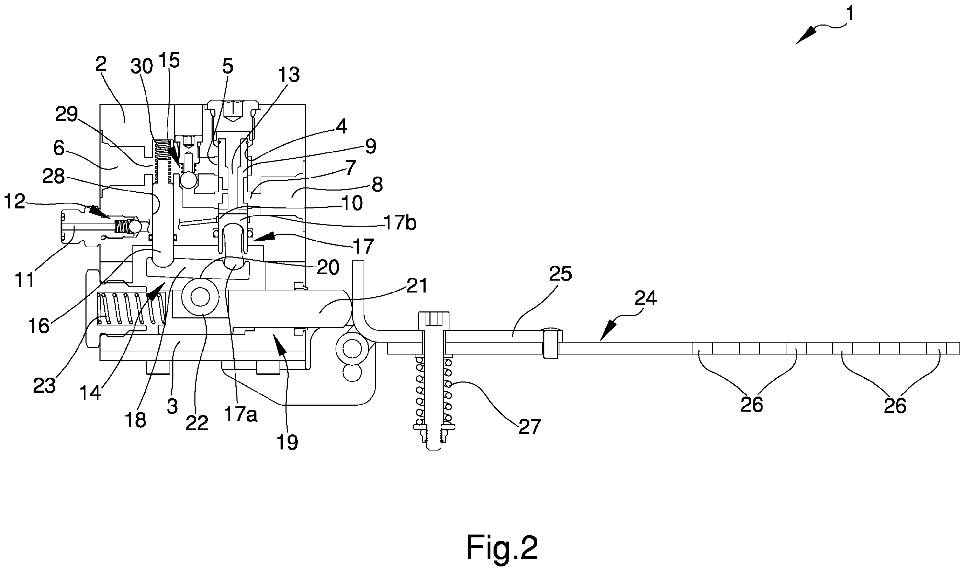

More particularly, in the embodiments of the device 1 shown in Figures 2, 3 and 4, the connecting element 18 is hinged on one side to the first command element 16 and on the opposite side to the second command element 17 and is moveable in turn around a fulcrum 20.

Advantageously, the connecting element 18 is of the type of a lever and the adjustment means 19 comprise at least one adjustment element 21 connectable to the trailer and moveable with respect to the body 2, 3 depending on the load of the trailer itself, and comprise at least one holding element 22, arranged in contact with the connecting element 18 and constrained to the adjustment element 21, where the area of contact with the connecting element 18 defines the fulcrum 20. As a result of the displacement of the adjustment element 21, the holding element 22 therefore moves with respect to the connecting element 18, by rolling (or by rotating and translating) over it, thereby modifying the area of contact between them, and hence, the fulcrum around which the connecting element itself is able to rotate.

Suitably, the adjustment element 21 is moveable in translation with respect to the body 2,3 counteracting the first elastic means 23.

In the embodiments shown in Figures 2 to 4, the adjustment element 21 has an elongated shape and the holding element 22 has at least one curved surface arranged in contact with the connecting element 18.

In an alternative embodiment, not shown in the illustrations, the adjustment element 21 is movable in rotation with respect to the body 2,3 between the position of maximum load and that of minimum load.

Preferably, the device 1 also comprises activation means 24 of the displacement of the adjustment element 21 associable with the trailer.

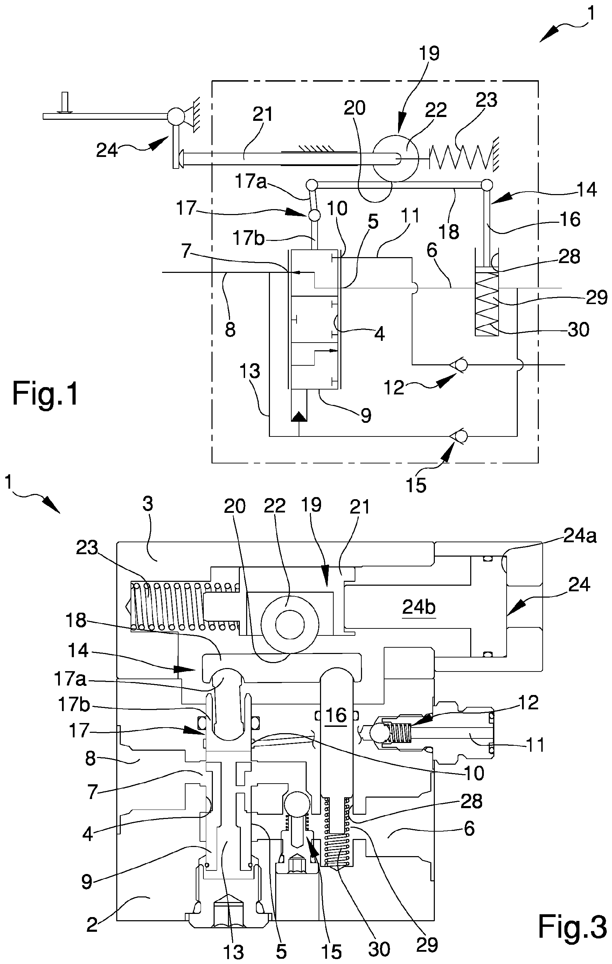

The activation means 24 can be of the mechanical type, as in the embodiment of Figure 2, adapted to a trailer provided with mechanical suspensions, or of the fluid-operated type, as in the embodiment of Figure 3, adapted to a trailer provided with hydraulic or pneumatic suspensions.

More particularly, in the embodiment of Figure 2, the activation means 24 comprise a rocker element 25, provided with fixing means 26 to the trailer, hinged to the body 2,3 and adapted to interact with the adjustment element 21. As a result of the displacement of the chassis of the trailer, due to the variation in its load, the rocker element 25 rotates around its hinging axis thus causing the translation of the adjustment element 21.

More particularly, the first elastic means 23 are adapted to push the adjustment element 21 towards the position of maximum load, i.e. towards the rocker element 25. Following the increase in the load of the trailer, the rocker element 25 rotates in a first direction (downwards in Figure 2), thus allowing the adjustment element 21 to displace towards the position of maximum load due to the thrust exerted by the first elastic means 23, while as a result of the decrease in the load of the trailer, the rocker element 25 rotates in the opposite direction (upwards in Figure 3) thus pushing the adjustment element 21 towards the position of minimum braking, counteracting the first elastic means 23. In this first embodiment, in the case of an extra-stroke downwards, the rocker element 25 detaches from the adjustment element 21, while in the case of an extra-stroke upwards, compensation means 27 are provided, e.g. of the type of additional elastic means.

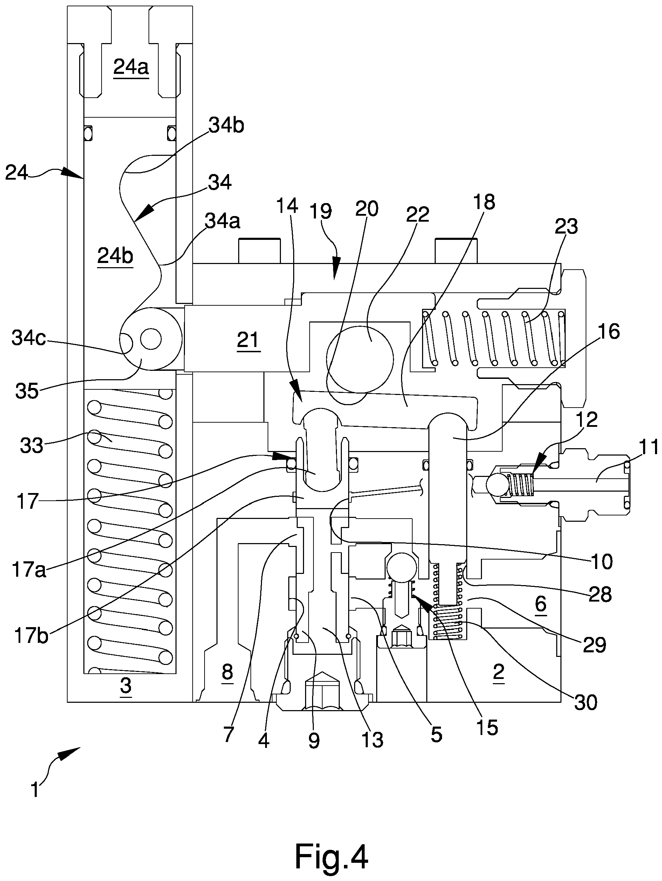

In the second and in the third embodiments shown in Figures 3 and 4, on the other hand, the activation means 24 are of the type of a fluid-operated cylinder, which defines an activation chamber 24a connectable to the hydraulic or pneumatic system of the suspensions of the trailer and acting on one activation element 24b adapted to interact with the adjustment element 21.

In the second embodiment of Figure 3, the first elastic means 23 are adapted to push the adjustment element 21 towards the position of minimum load. More particularly, as a result of the increase in the load on the trailer, the pressure acting on the activation element 24b increases, thus causing the displacement of the adjustment element 21 towards the position of maximum load, counteracting the first elastic means 23, while as a result of the decrease in the load, the pressure acting on the activation element 24b decreases, thus allowing the displacement of the adjustment element 21 towards the position of minimum load due to the thrust of the first elastic means 23.

In the third embodiment of Figure 4, on the other hand, the first elastic means 23 are adapted to push the adjustment element 21 towards the position of maximum load and the activation element 24b is moveable counteracting the second elastic means 33. More in detail, in this embodiment, the activation element 24b has a thrust surface 34 which is adapted to interact with the adjustment element 21, e.g. by means of an intermediate element 35.

The thrust surface 34 defines at least one protrusion 34a and at least a first recess 34b, which are adapted to interact in sequence with the adjustment element 21, as a result of the increase in pressure in the activation chamber 24a, to cause the displacement thereof in the position of minimum and maximum load respectively. More particularly, as a result of a first increase in pressure in the activation chamber 24a, the activation element 24b moves counteracting the second elastic means 33 by making the protrusion 34a interact with the intermediate element 35, so as to push the adjustment element 21 counteracting the first elastic means 23, towards the position of minimum load. As a result of the further increase in pressure in the activation chamber 24a, the activation element 24b moves further counteracting the second elastic means 33 by making the intermediate element 35 enter the first recess 34b; this causes the displacement of the adjustment element 21 towards the position of maximum load due to the thrust of the first elastic means 23. Advantageously, the thrust surface 34 also defines a second recess 34c, arranged on the opposite side of the first recess 34b with respect to the protrusion 34a, which is adapted to interact with the adjustment element 21 to allow the displacement thereof to the position of maximum load under emergency conditions. More in detail, when pressure inside the activation chamber 24a is substantially equal to zero, e.g. due to the breakage of the suspensions as a result of which the trailer rests on the end-of-stroke pads, the activation element 24b is pushed by the second elastic means 33 towards its end-of-stroke position, at which the intermediate element 35 enters the second recess 34c. In this case too, the adjustment element 21 is pushed from the first elastic means 23 towards the position of maximum load.

In all embodiments shown in the illustrations, the first command element 16 is slidably housed inside a further seat 28 formed in the body 2, 3, where between the first command element 16 and the further seat 28 is defined a thrust chamber 29 communicating with the control line 6. The pressure variations inside the thrust chamber 29 cause therefore the first command element 16 to move from the rest position towards a thrust position.

More in detail, the first command element 16 moves from the rest position, in which it does not exert any force on the connecting element 18 (and therefore not even on the second command element 17), towards a thrust position, in which it exerts a force on the connecting element 18, due to the increase in pressure inside the thrust chamber 29 and vice versa.

Inside the thrust chamber 29 are also housed further elastic means 30 adapted to push the first command element 16 from the rest position towards the thrust position.

The second command element 17, in turn, comprises a first and a second spherical-head tip 17a, 17b which are hinged to one another. More particularly, the first tip 17a is hinged on one side to the connecting element 18 and on the opposite side to the second tip 17b, and the latter acts on the distributor 9. Advantageously, the body 2,3 comprises at least a first body 2, inside which is defined at least the seat 4, and a second body 3, associated with the first body 2, inside which are defined the adjustment means 19. More particularly, inside the first body 2 is also defined the further seat 28 and the command means 14 are housed.

The operation of the present invention is as follows.

As a result of the braking of the towing vehicle, a pressurized work fluid is sent to the control line 6, thus causing the pressurization of the thrust chamber 29. At the same time, depending on the load of the trailer, the activation means 24 causes the displacement of the adjustment element 21 and, consequently, of the holding element 22.

Depending on the position of the holding element 22 and, hence, of the fulcrum 20, in addition to the pressure in the thrust chamber 29, the first command element 16 moves from the rest position to a thrust position, thus causing the rotation of the connecting element 18 around the fulcrum 20 and the displacement of the second command element 17.

The action of the second command element 17 causes the displacement of the distributor towards a braking position, in such a way that the pressurized fluid present in the control line 6 reaches the delivery port 7 and the braking system of the trailer.

As a result of the increase in pressure along the delivery line 8, the force also increases which is exerted onto the distributor 9 through the driving channel 13, counteracting the action of the command means 14.

When the forces acting on the distributor 9 are balanced, the latter moves to the balance position.

This position can vary as a result of a variation in the load of the trailer, in which case, pressure in the thrust chamber 29 being equal, the force changes which is exerted by the second command element 17 to the distributor 9, or as a result of the interruption of the braking action, in which case the distributor 9 moves to the discharge position or the pressurized fluid returns towards the control line 6 also through the second valve means 15.

In the first hypothesis, i.e. the variation in the load of the trailer, the fulcrum 20 is displaced approaching or moving away from the first command element 16 depending on the load being decreased or increased respectively. As aforesaid, due to the moving away and approaching of the fulcrum 20 to the first command element 16, the moment of the force increases and decreases respectively, that the first command element itself exerts on the second command element 17 through the connecting element 18.

The user can then choose, as required, in the case of trailers provided with hydraulic or pneumatic suspensions, to send, in the absence of pressure in the suspensions, e.g. due to breakages or malfunctions, the minimum pressure to the braking system of the trailer, as in the embodiment of Figure 3, or the maximum pressure, as in the embodiment of Figure 4.

It has in practice been ascertained that the described invention achieves the intended objects and in particular it is emphasized that the device the present invention refers to allows adjusting the braking pressure of the trailer depending on its load.

More specifically, by varying the position of the fulcrum around which the connecting element rotates according to the load of the trailer, the work fluid passage section arriving from the control line also varies, thereby adjusting the braking pressure of the trailer irrespective of the braking pressure of the towing vehicle.

The device according to the invention thus allows adjusting the braking pressure of the trailer in an easy and safe manner also for trailers provided with suspensions, whether mechanical, hydraulic or pneumatic.

## Claims

1. Device (1) for controlling the braking of a trailer, comprising:
- at least one body (2, 3) associable with a trailer and in which is formed at least one seat (4) having at least one braking port (5), communicating with a control line (6) connectable to the braking system of a towing vehicle to receive a work fluid under pressure, and at least one delivery port (7), communicating with a delivery line (8) connectable to the braking system of the trailer;
- at least one distributor (9) housed sliding inside said seat (4) and movable between at least one braking position, in which said braking port (5) is communicating with said delivery port (7), and at least one balance position, in which said braking port (5) is isolated from said delivery port (7);
- at least one driving channel (13) communicating with said delivery port (7) and acting on said distributor (9) to push it away from the braking position;
- command means (14) acting on said distributor (9), on the opposite side of said driving channel (13), and adapted to exert a force of variable intensity depending on the load of said trailer;
**characterized by** the fact that said command means (14) comprise:
- at least a first command element (16) connected in a fluid-operated manner to said control line (6) and adapted to displace between a rest position and a thrust position by effect of the pressure increase of the work fluid along said control line (6);
- at least one connecting element (18) adapted to transfer the force from the first command element (16) to said distributor (9) and interposed between them;
- adjustment means (19) of the force transmitted by said connecting element (18) to said distributor (9), where said adjustment means (19) are connectable to the trailer and are moveable between a position of maximum load, in which the force transmitted to said distributor (9) is maximum, and a position of minimum load, in which the force transmitted to said distributor (9) is minimum.

2. Device (1) according to claim 1, **characterized by** the fact that said connecting element (18) cooperates on one side with said first command element (16) and on the opposite side with said distributor (9), and is movable in rotation around a fulcrum (20) and by the fact that said adjustment means (19) are adapted to vary the position of said fulcrum (20) with respect to said connecting element (18) depending on the load of the trailer.

3. Device (1) according to claim 2, **characterized by** the fact that the distance between said fulcrum (20) and said first command element (16) is maximum and minimum in the position of maximum load and in the position of minimum load, respectively.

4. Device (1) according to claim 3, **characterized by** the fact that said connecting element (18) is of the type of a lever and by the fact that said adjustment means (19) comprise at least one adjustment element (21) connectable to the trailer and movable with respect to said body (2, 3) depending on the load of the trailer itself, at least one holding element (22) constrained to said adjustment element (21) and arranged in contact with said connecting element (18), where the area of contact between said holding element (22) and said connecting element (18) defines said fulcrum (20).

5. Device (1) according to claim 4, **characterized by** the fact that said adjustment element (21) is shiftable counteracting first elastic means (23) and by the fact that said holding element (22) has at least one curved surface arranged in contact with said connecting element (18).

6. Device (1) according to claim 4, **characterized by** the fact that said adjustment element (21) is movable in rotation with respect to said body (2, 3).

7. Device (1) according to one or more of the claims from 2 to 5, **characterized by** the fact that it comprises activation means (24) of the displacement of said adjustment element (21).

8. Device (1) according to claim 7, **characterized by** the fact that said activation means (24) are of the mechanical type.

9. Device (1) according to claim 7, **characterized by** the fact that said activation means (24) are of the fluid-operated type.

10. Device (1) according to claim 9, **characterized by** the fact that said activation means (24) comprise at least one activation chamber (24a) communicating with the suspensions of the trailer and acting on at least one activation element (24b) and adapted to interact with said adjustment element (21).

11. Device (1) according to claim 10, **characterized by** the fact that said activation element (24b) has at least one thrust surface (34) defining at least one protrusion (34a) and at least a first recess (34b) adapted to interact in sequence with said adjustment element (21), following the increase in pressure in said activation chamber (24a), to cause the displacement thereof in the position of minimum and maximum load respectively, said activation element (24b) moving counteracting second elastic means (33).

12. Device (1) according to claim 11, **characterized by** the fact that said thrust surface (34) defines at least a second recess (34c), arranged on the opposite side of said first recess (34b) with respect to said protrusion (34a), adapted to interact with said adjustment element (21) to allow the displacement thereof in the position of maximum load following the substantial setting at zero of the pressure in said activation chamber (24a).

13. Device (1) according to one or more of the preceding claims, **characterized by** the fact that said adjustment means (19) comprise at least a second command element (17) interposed between said connecting element (18) and said distributor (9).

14. Device (1) according to one or more of the claims from 2 to 8, **characterized by** the fact that said first command element (16) is slidably housed inside a further seat (28) formed in said body (2, 3), where between said further seat (28) and said first command element (16) is defined at least one thrust chamber (29) communicating with said control line (6), said first command element (16) moving from the rest position towards a thrust position by effect of the pressure increase in said thrust chamber (29).

15. Device (1) according to one or more of the preceding claims, **characterized by** the fact that said seat (4) has an additional port (10) communicating with an additional line (11) connectable to the automatic and/or parking brake of the trailer, by the fact that said distributor (9) has at least one discharge position, in which said delivery port (7) is communicating with said additional port (10) and is isolated from said braking port (5) and by the fact that it comprises first one-way valve means (12) arranged along said additional line (11) and adapted to prevent the work fluid from flowing towards said delivery port (7).

## Patentansprüche

1. Vorrichtung (1) zum Steuern der Bremsung eines Anhängers, umfassend:
- mindestens eine Karosserie (2, 3), die mit einem Anhänger verbunden werden kann und in der mindestens ein Sitz (4) mit mindestens einem Bremsanschluss (5) ausgebildet ist, der mit einer Steuerleitung (6) in Verbindung steht, die mit dem Bremssystem eines Zugfahrzeugs verbunden werden kann, um ein Arbeitsfluid unter Druck aufzunehmen, und mindestens einen Versorgungsanschluss(7), der mit einer Versorgungsleitung (8) verbunden ist, die mit dem Bremssystem des Anhängers verbunden werden kann,
- mindestens einen Verteiler (9), der innerhalb des Sitzes (4) verschiebbar untergebracht ist und beweglich ist zwischen mindestens einer Bremsposition, in der der Bremsanschluss (5) mit dem Versorgungsanschluss (7) verbunden ist, und mindestens einer Ausgleichsposition, in der der Bremsanschluss (5) von dem Versorgungsanschluss (7) isoliert ist,
- mindestens einen Antriebskanal (13), der mit dem Versorgungsanschluss (7) in Verbindung steht und auf den Verteiler (9) wirkt, um ihn von der Bremsposition wegzudrücken,
- Befehlsmittel (14), die auf den Verteiler (9) auf der gegenüberliegenden Seite des Antriebskanals (13) wirken und eingerichtet sind, um eine Kraft mit variabler Intensität in Abhängigkeit von der Belastung des Anhängers auszuüben,
**dadurch gekennzeichnet, dass** die Befehlsmittel (14) umfassen:
- mindestens ein erstes Befehlselement (16), das fluidbetrieben mit der Steuerleitung (6) verbunden und eingerichtet ist, um sich zwischen einer Ruheposition und einer Schubposition durch die Wirkung der Druckerhöhung des Arbeitsfluides entlang der Steuerleitung (6) zu verschieben,
- mindestens ein Verbindungselement (18), das eingerichtet ist, um die Kraft von dem ersten Befehlselement (16) auf den Verteiler (9) zu übertragen und zwischen ihnen angeordnet ist,
- Einstellmittel (19) der durch das Verbindungselement (18) auf den Verteiler (9) übertragenen Kraft, wobei die Einstellmittel (19) mit dem Anhänger verbindbar sind und beweglich sind zwischen einer Position der maximalen Belastung, in der die auf den Verteiler (9) übertragene Kraft maximal ist, und einer Position der minimalen Belastung, in der die auf den Verteiler (9) übertragene Kraft minimal ist.

2. Vorrichtung (1) nach Anspruch 1, **gekennzeichnet durch** die Tatsache, dass das Verbindungselement (18) auf einer Seite mit dem ersten Befehlselement (16) und auf der gegenüberliegenden Seite mit dem Verteiler (9) zusammenwirkt und um einen Drehpunkt (20) drehbar beweglich ist, und durch die Tatsache, dass die Einstellmittel (19) eingerichtet sind, um die Position des Drehpunktes (20) in Bezug auf das Verbindungselement (18) in Abhängigkeit von der Belastung des Anhängers zu verändern.

3. Vorrichtung (1) nach Anspruch 2, **gekennzeichnet durch** die Tatsache, dass der Abstand zwischen dem Drehpunkt (20) und dem ersten Befehlselement (16) in der Position der maximalen Belastung und in der Position der minimalen Belastung maximal beziehungsweise minimal ist.

4. Vorrichtung (1) nach Anspruch 3, **gekennzeichnet durch** die Tatsache, dass das Verbindungselement (18) vom Typ eines Hebels ist und dass die Einstellmittel (19) mindestens ein Einstellelement (21) umfassen, das mit dem Anhänger verbindbar und abhängig von der Belastung des Anhängers selbst in Bezug auf die Karosserie (2, 3) beweglich ist, mindestens ein Halteelement (22), das auf das Einstellelement (21) beschränkt und in Kontakt mit dem Verbindungselement (18) angeordnet ist, wobei die Kontaktfläche zwischen dem Halteelement (22) und dem Verbindungselement (18) den Drehpunkt (20) definiert.

5. Vorrichtung (1) nach Anspruch 4, **gekennzeichnet durch** die Tatsache, dass das Einstellelement (21) gegen erste elastische Mittel (23) verschiebbar ist, und durch die Tatsache, dass das Halteelement (22) mindestens eine gekrümmte Oberfläche aufweist, die in Kontakt mit dem Verbindungselement (18) angeordnet ist.

6. Vorrichtung (1) nach Anspruch 4, **gekennzeichnet durch** die Tatsache, dass das Einstellelement (21) in Bezug auf die Karosserie (2, 3) drehbar ist.

7. Vorrichtung (1) nach einem oder mehreren der Ansprüche von 2 bis 5, **gekennzeichnet durch** die Tatsache, dass sie Aktivierungsmittel (24) für die Verschiebung des Einstellelements (21) umfasst.

8. Vorrichtung (1) nach Anspruch 7, **gekennzeichnet durch** die Tatsache, dass die Aktivierungsmittel (24) mechanisch sind.

9. Vorrichtung (1) nach Anspruch 7, **gekennzeichnet durch** die Tatsache, dass die Aktivierungsmittel (24) vom fluidbetriebenen Typ sind.

10. Vorrichtung (1) nach Anspruch 9, **gekennzeichnet durch** die Tatsache, dass die Aktivierungsmittel (24) mindestens eine Aktivierungskammer (24a) umfassen, die mit den Aufhängungen des Anhängers in Verbindung steht und auf mindestens ein Aktivierungselement (24b) wirkt und eingerichtet ist, um mit dem Einstellelement (21) zusammenzuwirken.

11. Vorrichtung (1) nach Anspruch 10, **gekennzeichnet durch** die Tatsache, dass das Aktivierungselement (24b) mindestens eine Schubfläche (34), die mindestens einen Vorsprung (34a) und mindestens eine erste Aussparung (34b) definiert, die eingerichtet sind, um nacheinander mit dem Einstellelement (21) zusammenzuwirken, um dem Druckanstieg in der Aktivierungskammer (24a) folgend dessen Verschiebung in die Position der minimalen bzw. maximalen Belastung zu bewirken, wobei sich das Aktivierungselement (24b) gegen zweite elastischen Mittel (33) bewegt.

12. Vorrichtung (1) nach Anspruch 11, **gekennzeichnet durch** die Tatsache, dass die Schubfläche (34) mindestens eine zweite Aussparung (34c) definiert, die auf der gegenüberliegenden Seite der ersten Aussparung (34b) in Bezug auf den Vorsprung (34a) angeordnet ist und eingerichtet ist, um mit dem Einstellelement (21) zusammenzuwirken, um dessen Verschiebung in die Position der maximalen Belastung nach dem wesentlichen Einstellen des Drucks in der Aktivierungskammer (24a) auf null zu ermöglichen.

13. Vorrichtung (1) nach einem oder mehreren der vorhergehenden Ansprüche, **gekennzeichnet durch** die Tatsache, dass die Einstellmittel (19) mindestens ein zweites Befehlselement (17) umfassen, das zwischen dem Verbindungselement (18) und dem Verteiler (9) angeordnet ist.

14. Vorrichtung (1) nach einem oder mehreren der Ansprüche von 2 bis 8, **gekennzeichnet durch** die Tatsache, das erste Befehlselement (16) verschiebbar in einem weiteren Sitz (28) untergebracht ist, der in der Karosserie (2, 3) ausgebildet ist, wobei zwischen dem weiteren Sitz (28) und dem ersten Befehlselement (16) mindestens eine mit der Steuerleitung (6) in Verbindung stehende Schubkammer (29) definiert ist, wobei sich das erste Befehlselement (16) durch die Wirkung der Druckerhöhung in der Schubkammer (29) von der Ruheposition in Richtung einer Schubposition bewegt.

15. Vorrichtung (1) nach einem oder mehreren der vorstehenden Ansprüche, **gekennzeichnet durch** die Tatsache, dass der Sitz (4) einen zusätzlichen Anschluss (10) aufweist, der mit einer zusätzlichen Leitung (11) verbunden ist, die mit der automatischen und/oder Feststellbremse des Anhängers verbunden werden kann, durch die Tatsache, dass der Verteiler (9) mindestens eine Entladeposition aufweist, in der der Versorgungsanschluss (7) mit dem zusätzlichen Anschluss (10) in Verbindung steht und von dem Bremsanschluss (5) isoliert ist, und durch die Tatsache, dass sie erste Einwegventilmittel (12) umfasst, die entlang der zusätzlichen Leitung (11) angeordnet und eingerichtet sind, um zu verhindern, dass das Arbeitsfluid in Richtung des Versorgungsanschlusses (7) fließt.

## Revendications

1. Dispositif (1) pour commander le freinage d'une remorque, comprenant :
- au moins un corps (2, 3) pouvant être associé à une remorque et dans lequel est formé au moins un siège (4) ayant au moins un orifice de freinage (5), communiquant avec une conduite de contrôle (6) pouvant être raccordée au système de freinage d'un véhicule de traction pour recevoir un fluide de travail sous pression, et au moins un orifice de distribution (7), communiquant avec une conduite de distribution (8) pouvant être raccordée au système de freinage de la remorque ;
- au moins un distributeur (9) logé de manière coulissante à l'intérieur dudit siège (4) et mobile entre au moins une position de freinage, dans laquelle ledit orifice de freinage (5) communique avec une ledit orifice de distribution (7), et au moins une position d'équilibre, dans laquelle ledit orifice de freinage (5) est isolé dudit orifice de distribution (7) ;
- au moins un canal d'entraînement (13) communiquant avec ledit orifice de distribution (7) et agissant sur ledit distributeur (9) pour le pousser à l'écart de la position de freinage ;
- des moyens de commande (14) agissant sur ledit distributeur (9), sur le côté opposé dudit canal d'entraînement (13), et adaptés pour exercer une force d'intensité variable en fonction de la charge de ladite remorque ;
**caractérisé par le fait que** lesdits moyens de commande (14) comprennent :
- au moins un premier élément de commande (16) raccordé d'une manière actionnée par fluide à ladite conduite de contrôle (6) et adapté pour se déplacer entre une position de repos et une position de poussée par l'effet de l'augmentation de pression du fluide de travail le long de ladite conduite de contrôle (6) ;
- au moins un élément de raccordement (18) adapté pour transférer la force du premier élément de commande (16) audit distributeur (9) et interposé entre eux ;
- des moyens d'ajustement (19) de la force transmise par ledit élément de raccordement (18) audit distributeur (9), où lesdits moyens d'ajustement (19) peuvent être raccordés à la remorque et sont mobiles entre une position de charge maximale, dans laquelle la force transmise audit distributeur (9) est maximale, et une position de charge minimale, dans laquelle la force transmise audit distributeur (9) est minimale.

2. Dispositif (1) selon la revendication 1, **caractérisé par le fait que** ledit élément de raccordement (18) coopère sur un côté avec ledit premier élément de commande (16) et sur le côté opposé avec ledit distributeur (9), et est mobile en rotation autour d'un pivot (20) et **par le fait que** lesdits moyens d'ajustement (19) sont adaptés pour faire varier la position dudit pivot (20) par rapport audit élément de raccordement (18) en fonction de la charge de la remorque.

3. Dispositif (1) selon la revendication 2, **caractérisé par le fait que** la distance entre ledit pivot (20) et ledit premier élément de commande (16) est maximale et minimale dans la position de charge maximale et dans la position de charge minimale, respectivement.

4. Dispositif (1) selon la revendication 3, **caractérisé par le fait que** ledit élément de raccordement (18) est du type d'un levier et **par le fait que** lesdits moyens d'ajustement (19) comprennent au moins un élément d'ajustement (21) pouvant être raccordé à la remorque et mobile par rapport audit corps (2, 3) en fonction de la charge de la remorque elle-même, au moins un élément de maintien (22) contraint sur ledit élément d'ajustement (21) et agencé en contact avec ledit élément de raccordement (18), où la zone de contact entre ledit élément de maintien (22) et ledit élément de raccordement (18) définit ledit pivot (20).

5. Dispositif (1) selon la revendication 4, **caractérisé par le fait que** ledit élément d'ajustement (21) peut être décalé, contrant des premiers moyens élastiques (23) et **par le fait que** ledit élément de maintien (22) présente au moins une surface incurvée agencée en contact avec ledit élément de raccordement (18).

6. Dispositif (1) selon la revendication 4, **caractérisé par le fait que** ledit élément d'ajustement (21) est mobile en rotation par rapport audit corps (2, 3).

7. Dispositif (1) selon une ou plusieurs des revendications de 2 à 5, **caractérisé par le fait qu'**il comprend des moyens d'activation (24) du déplacement dudit élément d'ajustement (21).

8. Dispositif (1) selon la revendication 7, **caractérisé par le fait que** lesdits moyens d'activation (24) sont du type mécanique.

9. Dispositif (1) selon la revendication 7, **caractérisé par le fait que** lesdits moyens d'activation (24) sont du type actionné par fluide.

10. Dispositif (1) selon la revendication 9, **caractérisé par le fait que** lesdits moyens d'activation (24) comprennent au moins une chambre d'activation (24a) communiquant avec les suspensions de la remorque et agissant sur au moins un élément d'activation (24b) et adaptée pour interagir avec ledit élément d'ajustement (21).

11. Dispositif (1) selon la revendication 10, **caractérisé par le fait que** ledit élément d'activation (24b) comporte au moins une surface de poussée (34) définissant au moins une saillie (34a) et au moins un premier évidement (34b) adaptés pour interagir séquentiellement avec ledit élément d'ajustement (21), à la suite de l'augmentation de pression dans ladite chambre d'activation (24a), pour entraîner le déplacement de celui-ci dans la position de charge minimale et maximale respectivement, ledit élément d'activation (24b) se déplaçant, contrant des seconds moyens élastiques (33).

12. Dispositif (1) selon la revendication 11, **caractérisé par le fait que** ladite surface de poussée (34) définit au moins un second évidement (34c), agencé sur le côté opposé dudit premier évidement (34b) par rapport à ladite saillie (34a), adapté pour interagir avec ledit élément d'ajustement (21) pour permettre le déplacement de celui-ci dans la position de charge maximale à la suite du réglage substantiel à zéro de la pression dans ladite chambre d'activation (24a).

13. Dispositif (1) selon une ou plusieurs des revendications précédentes, **caractérisé par le fait que** lesdits moyens d'ajustement (19) comprennent au moins un second élément de commande (17) interposé entre ledit élément de raccordement (18) et ledit distributeur (9).

14. Dispositif (1) selon une ou plusieurs des revendications de 2 à 8, **caractérisé par le fait que** ledit premier élément de commande (16) est logé de manière coulissante à l'intérieur d'un siège supplémentaire (28) formé dans ledit corps (2, 3), où entre ledit siège supplémentaire (28) et ledit premier élément de commande (16) est définie au moins une chambre de poussée (29) communiquant avec ladite conduite de contrôle (6), ledit premier élément de commande(16) se déplaçant de la position de repos vers une position de poussée par l'effet de l'augmentation de pression dans ladite chambre de poussée (29).

15. Dispositif (1) selon une ou plusieurs des revendications précédentes, **caractérisé par le fait que** ledit siège (4) comporte un orifice supplémentaire (10) communiquant avec une conduite supplémentaire (11) pouvant être raccordée au frein automatique et/ou à main de la remorque, **par le fait que** ledit distributeur (9) a au moins une position de décharge, dans laquelle ledit orifice de distribution (7) communique avec ledit orifice supplémentaire (10) et est isolé dudit orifice de freinage (5) et **par le fait qu'**il comprend des premiers moyens formant clapet de non-retour (12) agencés le long de ladite conduite supplémentaire (11) et adaptés pour empêcher le fluide de travail de s'écouler vers ledit orifice de distribution (7).
